# FASCICULE DE BREVET EUROPEEN

(11) **EP 3 752 728 B1**
(45) Date de publication et mention de la délivrance du brevet: **20.07.2022**
(21) Numéro de dépôt: 19710752.7
(22) Date de dépôt: 15.02.2019
(51) Int. Cl.: F02K 1/38, F02C 7/045, B64C 21/10, F15D 1/00, B64C 3/16, B64C 3/14, B64C 11/18, B64C 5/00, B64C 7/02, B64C 23/00, B64C 21/00

(54) **TURBOMACHINE POUR AÉRONEF ET AÉRONEF ASSOCIÉ**
STRÖMUNGSMASCHINE FÜR FLUGZEUG UND ZUGEHÖRIGES FLUGZEUG
TURBOMACHINE FOR AIRCRAFT AND CORRESPONDING AIRCRAFT

(30) Priorité: 16.02.2018 FR 1851359
(43) Date de publication de la demande: 23.12.2020
(73) Titulaire: SAFRAN AIRCRAFT ENGINES, 75015 Paris (FR)
(72) Inventeur: GEA AGUILERA, Fernando, 77550 Moissy-Cramayel (FR); FIACK, Matthieu, 77550 Moissy-Cramayel (FR); GRUBER, Mathieu, Simon, Paul, 77550 Moissy-Cramayel (FR)
(74) Mandataire: Ernest Gutmann - Yves Plasseraud S.A.S.
(86) Numéro de dépôt international: PCT/FR2019/050349
(87) Numéro de publication internationale: WO 2019/158875

(56) Documents cités:
- EP-A2- 1 602 575
- CN-A- 101 716 995
- US-A- 1 862 827
- US-A- 3 403 893

## Description

### DOMAINE TECHNIQUE

La présente invention concerne le domaine de la gestion aéro-acoustique de structures profilées d'écoulement d'air, telles par exemple que des aubes fixes dans une turbomachine pour aéronef ou dans un banc d'essai de telles turbomachines, ou un bec d'entrée d'air primaire de turbomachine (turboréacteur double flux en l'espèce). Plus spécifiquement, la présente invention concerne une turbomachine pour aéronef et un aéronef.

### ÉTAT DE LA TECHNIQUE ANTÉRIEURE

Un exemple sera donné pour une turbomachine double flux pourvue d'une soufflante (dite amont, située donc en partie amont de la turbomachine) et d'un redresseur disposé en veine secondaire et sur laquelle le type précitée d'aube fixe se retrouve par exemple sur des aubes directrices de sortie OGV (outlet guide vane), ou redresseurs, disposés en aval d'un corps tournant pour redresser le flux d'air.

Sur certains turboréacteurs, il est envisagé d'augmenter le diamètre de la soufflante et de réduire la longueur de la nacelle de suspension à l'aéronef, diminuant ainsi la distance entre la soufflante et les aubes directrices d'entrée IGV (Inlet Guide Vanes), les OGV et le bec d'entrée d'air primaire. Dans ce type de moteur, l'interaction du sillage de la soufflante avec les IGV, les OGV et le bec est une des sources de bruit à large bande dominante.

Au-delà de ce constat dans une turbomachine, d'autres zones de turbomachines, mais aussi de structures profilées d'écoulement d'air (ailes, aubes d'open-rotor - rotor ouvert -... etc.) sont confrontées à des problématiques de gestion aéro-acoustique.

Aussi a-t-il déjà été proposé, au moins dans le domaine des aéronefs, d'utiliser des structures profilées d'écoulement d'air présentant un bord d'attaque et/ou de fuite profilé ayant, suivant une ligne de bord d'attaque et/ou de fuite, un profil en serrations pourvu donc d'une succession de dents et de creux.

Ainsi, ce profil en serrations s'étend le long du bord d'attaque et/ou de fuite, autrement dit dans la direction de l'allongement de la structure au bord d'attaque et/ou de fuite.

Bien que les profils « serrations » soient capables de réduire le bruit à large bande émis, ils ont un impact sur l'écoulement autour des profils. Les propriétés aérodynamiques (pertes aérodynamiques, portance, décrochage de la couche limite...etc) peuvent donc être affectées de manière significative.

Par ailleurs, le flux d'air généré, axialement (axe X ci-après, aussi dénommé axe général) en aval d'une structure tournante, comme en aval d'une soufflante de turbomachine vers un bec de veine d'air primaire, ou qui peut être influencé par une structure perturbante, comme par exemple une aile par un fuselage d'aéronef, ou un stabilisateur par une dérive, est tourbillonnant et fortement influencé par un sens de rotation de l'air ou par celui de la soufflante.

Un but est ici d'optimiser la réalisation des serrations afin de réduire les niveaux de bruit acoustiques en minimisant l'impact sur les propriétés aérodynamiques.

CN101 716 995 A divulgue une turbomachine selon le préambule de la revendication 1.

### EXPOSÉ DE L'INVENTION

Aussi est-il proposé une turbomachine pour aéronef :
- la turbomachine présentant un axe général (X) autour duquel tournent des parties rotatives de la turbomachine, dont des aubes d'une soufflante amont,
- la turbomachine comprenant, qui chacune présente un bord d'attaque :
   -- une paroi annulaire de séparation d'un flux d'air, en aval de la soufflante amont, la paroi annulaire de séparation séparant le flux d'air en un flux primaire et un flux secondaire,
   -- des premières aubes (dites IGV) fixes de guidage du flux primaire (Fp) dans la turbomachine, et
   -- des secondes aubes (dites OGV) fixes de guidage du flux secondaire dans la turbomachine, les premières aubes fixes de guidage du flux primaire et les secondes aubes fixes de guidage du flux secondaire étant liées à la paroi annulaire de séparation, et
- la turbomachine étant pourvue d'au moins une structure profilée,
   -- ayant un profil de bord d'attaque en serrations présentant une succession de dents et de creux, et
   -- telle que, le long du bord d'attaque, depuis un premier endroit vers un second endroit, les dents du profil en serrations sont individuellement inclinées vers le second endroit, la turbomachine étant caractérisée en ce que l'une au moins des caractéristiques a),b),c) suivantes est vérifiée ;

   a) les dents sont, circonférentiellement autour dudit axe général (X) et en aval de la soufflante amont, individuellement inclinées (angle β ci-après) vers une orientation (U ci-après) globalement oblique du flux d'air par rapport audit axe général (X), pour lui faire globalement face,
   b) sur la paroi annulaire de séparation du flux d'air où elles sont présentes, lesdites dents sont orientées dans la direction de la ligne de cambrure des premières aubes (IGV) fixes, au niveau du bord d'attaque,
   c) autour dudit axe général (X), certains au moins desdits creux du profil à serrations sont décalés angulairement par rapport à la position angulaire des premières aubes fixes de guidage du flux primaire dans la turbomachine, de telle sorte que lesdits certains au moins des creux soient angulairement interposés entre deux premières aubes circonférentiellement successives.

De fait, compte tenu des géométries des structures profilées actuellement jugées performantes et adaptées, les dents du profil en serrations seront, individuellement, favorablement non symétriques par rapport à une perpendiculaire à la ligne de bord d'attaque passant par le sommet de la dent considérée.

Avec de telles dents inclinées, on devrait pouvoir mieux tenir compte des phénomènes précités, afin que les surfaces des serrations puissent être aussi pleinement actives que possible dans l'effet acoustique attendu.

Un avantage est aussi que l'on va alors tenir compte du fait que le flux d'air généré axialement en aval la soufflante est tourbillonnant et est fortement influencé par le sens de rotation et la vitesse de rotation de cette soufflante.

Normalement, au moins avec un profil à géométrie élémentaire périodique non excessivement torturé (voir ci-avant), il doit s'avérer qu'à un bord d'attaque, l'écoulement ou flux d'air généré contourne le profil considéré au niveau des (sommets des) dents pour s'accélérer près des creux.

Dans ce cas, un avantage à avoir prévu que, comme précité, certains au moins des creux soient angulairement interposés entre deux premières aubes (IGV) circonférentiellement successives sera(serait) d'éviter d'avoir des zones de turbulences et/ou de survitesses trop importants au niveau de la zone carter du bord d'attaque des premières aubes (IGV).

Par ailleurs, un avantage à disposer de dents orientées dans la direction de la ligne de cambrure des IGV, au niveau du bord d'attaque sera(serait) la simplicité mécanique de cette solution.

Cependant, la direction de l'écoulement tournant change avec la vitesse de rotation de la soufflante (c'est-à-dire avec le régime moteur).

Deux approches intéressantes sont donc proposées :
a) les inclinaisons des dents sont fixées au régime de fonctionnement le plus intéressant du point de vue aéro-acoustique ; ces inclinaisons, qui peuvent être communes pour toutes le dents d'une même structure, sont alors fixes ; ou
b) sur une turbomachine pourvue d'au moins une structure profilée comme précitée, ou d'un aéronef ainsi équipé, les inclinaisons des dents du profil en serrations varient en fonction d'un régime moteur de la turbomachine.

La solution b) est techniquement plus pertinente, car elle permet d'optimiser l'inclinaison des dents en fonction des phases de fonctionnement du moteur et/ou de l'aéronef.

La solution a) est plus simple mécaniquement et son compromis peut satisfaire.

Encore une autre approche, qui peut être appliquée à une autre partie d'aéronef ou de turbomachine, pourrait être de prévoir une structure profilée dans laquelle la forme ondulée resterait périodique, mais présenterait, dans certaines au moins des périodes (groupes de dents successives), des dents différentes entre elles et/ou des creux différents entre eux.

Ainsi, sans qu'elles soient mobiles, les dents du profil au niveau du bord d'attaque et/ou fuite pourraient plus finement être adaptées à la complexité et à la variabilité des flux d'air reçus.

En termes de formes, il est proposé que les dents et creux du profil en serrations présentent individuellement une forme ondulée, avec des sommets arrondis ou plus pointus.

Des sommets arrondis permettent de réduire des concentrations de contraintes mécaniques trop fortes localement, ce qui augmente la durée de vie de la pièce en service.

Des sommets pointus permettent une réduction de bruit potentiellement augmentée.

Par ailleurs, prévoir des dents et creux présentant individuellement une forme à parois latérales localement rectilignes permet d'introduire une certaine décorrélation entre les sources de bruit le long du bord d'attaque et/ou de fuite.

On aura compris que des structures profilées autres qu'un bec d'entrée d'air primaire, un IGV ou un OGV pourraient bénéficier des considérations ici définies.

La structure profilée pourrait alors être l'une parmi une structure (c'est-à-dire un élément) d'aéronef, et notamment, une aile d'aéronef, un bec ou un volet d'aile d'aéronef, un pylône de support d'un moteur d'aéronef, une dérive, un stabilisateur d'aéronef, une pale d'hélicoptère, une hélice, une aube de turboréacteur.

En effet, dans les cas ci-avant, la présence d'un profil en serrations comme proposé permet de traiter un problème délicat liant des problématiques de gestion aéro-acoustique tant statiques (présence de structures d'entrée d'air, d'aubes...) que dynamiques (rotation d'aubes, prise en compte de certaines configurations de vols...) et ce d'autant plus avec des turbomachines à soufflante amont sur lesquelles les problèmes d'interférences acoustiques/aérodynamiques sont très complexes, et le bruit généré important.

L'invention sera si nécessaire encore mieux comprise et d'autres détails, caractéristiques et avantages pourront apparaître à la lecture de la description qui suit, faite à titre d'exemple non limitatif en référence aux dessins annexés.

### BRÈVE

### DESCRIPTION DES FIGURES

- la figure 1 est un schéma en coupe longitudinale (axe X) d'une turbomachine conventionnelle d'aéronef ;
- la figure 2 schématise la zone amont (bec) de la paroi de séparation entre les flux primaire et secondaire, avec une solution conforme à l'invention ;
- la figure 3 peut être soit le détail III de la figure 2, soit un schéma local de profil en serrations présent sur ce qui peut être une pale d'hélicoptère, une aube de la soufflante, du rotor ou du redresseur, un bec de bord d'attaque ou un volet d'aile d'aéronef ;
- la figure 4 est le détail IV de la figure 1 ;
- les figures 5-9 schématisent diverses formes de profils à serrations à dents fixes conformes à l'invention ;
- les figures 10-11 schématisent une hypothèse de profils à serrations à dents à orientation variable, et
- la figure 12 schématise un aéronef porteur de structures conformes à l'invention.

### DESCRIPTION DÉTAILLÉE

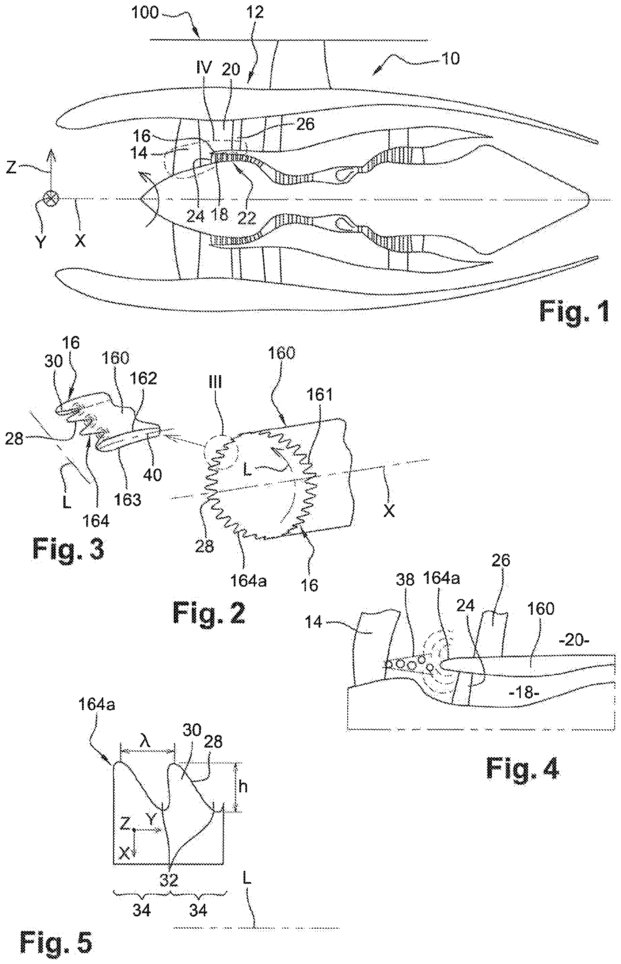

Si l'on se reporte à la figure 1, un turboréacteur 10 d'aéronef 100 est représenté de façon très schématique et est défini comme suit :
La nacelle 12 sert d'enveloppe extérieure aux différents organes, parmi lesquels, à l'avant (à gauche sur la figure 1) une soufflante 14 amont (AM) dont des aubes tournent autour de l'axe X.

En aval (AV) de la soufflante 14, le flux d'air (localement schématisé 38 figure 4) est séparé par le bec séparateur 16 d'une paroi annulaire 160 en un flux d'air primaire et un flux d'air secondaire. Le flux d'air primaire parcourt un passage d'air annulaire interne ou veine primaire 18 en pénétrant dans le compresseur basse pression 22 au niveau des aubes directrices d'entrée 24 IGV, dites aussi premières aubes. Le flux d'air secondaire est dévié par le bec séparateur 16 dans un passage d'air annulaire externe 20 (veine secondaire) en direction des aubes directrices de sortie 26 OGV, dites aussi secondes aubes, puis vers la sortie du moteur.

Sur la figure 2, on visualise de façon plus précise la partie amont 161 du bec séparateur 16 comprenant le bord d'attaque 164a situé le plus en amont et au niveau duquel la paroi externe 162 du bec séparateur 16 rejoint la paroi interne 163 du bec séparateur 16, la paroi supérieure 162 formant la virole intérieure de la veine secondaire 20.

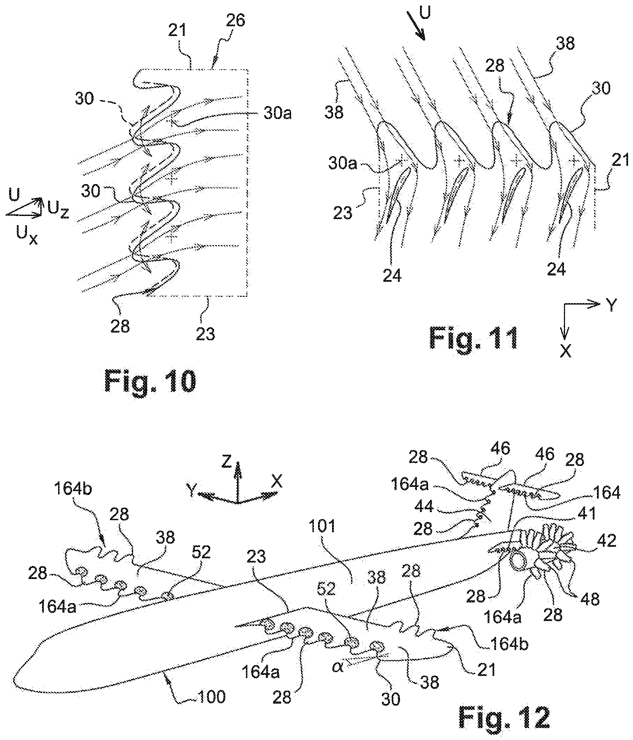

A toutes fins, il est précisé que, dans le présent texte, est axial ce qui s'étend suivant ou parallèlement à l'axe longitudinal (X) de rotation de la partie concernée de la turbomachine, lequel axe sera a priori l'axe général de rotation de cette turbomachine et l'axe longitudinal de l'aéronef, comme celui de l'avion schématisé figure 12. Est radial (axe Z) et est circonférentiel ce qui s'étend radialement à l'axe X et autour de lui, respectivement. Est interne ou intérieur et externe ou extérieur ce qui l'est radialement, vis-à-vis de l'axe X. Ainsi, la paroi interne 163 est la paroi radialement interne du bec séparateur 16. Par ailleurs, les références amont et aval sont à considérer en liaison avec l'écoulement des gaz dans la (partie de) turbomachine considérée : ces gaz entrent à l'amont et sortent à l'aval, en circulant globalement parallèlement à l'axe X.

En outre, les dessins joints, et les descriptions qui s'y rapportent, ont été définis en référence au repère orthogonal conventionnel X-Y-Z, avec donc l'axe X comme ci-dessus défini.

Le bec séparateur 16 est creux, la face extérieure de la paroi 162 servant de limite interne au passage d'air annulaire externe 20 recevant le flux secondaire tandis que la face intérieure de la paroi 163 sert de limite externe au passage d'air annulaire interne 18 recevant le flux primaire.

La paroi intérieure 163 du bec séparateur 16 forme la virole extérieure du compresseur basse pression 22.

Même si le décalage axial (X) vers l'aval des aubes IGV 24 par rapport au bord d'attaque 164a du bec séparateur 16 est moindre par comparaison avec celui des aubes OGV 26 par rapport à ce même bord d'attaque 164a, la portion de la partie amont 161 directement adjacente au bord d'attaque 164a du bec séparateur 16 est dégagée.

Comme expliqué ci-avant, pour l'effet induit de gestion aéro-acoustique par limitation du bruit généré par cette zone, on peut donc prévoir que ce bord d'attaque 164a ait un profil 28 à serrations présentant une succession de dents 30 et de creux 32, comme illustré dans les exemples des figures 5-6, par exemple.

Mais des structures autres que sur une turbomachine, telle le turboréacteur 10, peuvent être concernées par la solution de l'invention et présenter un bord d'attaque et/ou de fuite à profil 28 à serrations présentant une succession de dents 30 et de creux 32 bénéficiant de tout ou partie des caractéristiques de l'invention revendiquée, lesquelles caractéristiques leurs seraient alors appliquées au lieu de l'être à une turbomachine, comme revendiqué.

La figure 12 schématise ainsi un aéronef 100 sur lequel des structures à tels profils 28 à serrations sont présentes, en bord d'attaque, sur les ailes 38, sur un pylône 41 de support d'un moteur 42 de l'aéronef, sur une dérive 44, un stabilisateur 46, une hélice ou aube 48 de turboréacteur, typiquement d'open-rotor.

Par ailleurs, la figure 3 schématise localement un profil 28 en serrations présent sur ce qui peut être, repéré 50, une pale d'hélicoptère, une aube de la soufflante, du rotor ou du redresseur, un bec de bord d'attaque ou un volet d'aile d'aéronef.

Tous ces profils aérodynamiques ont pour point commun de générer une couche limite sur la surface en aval, et donc un écoulement turbulent.

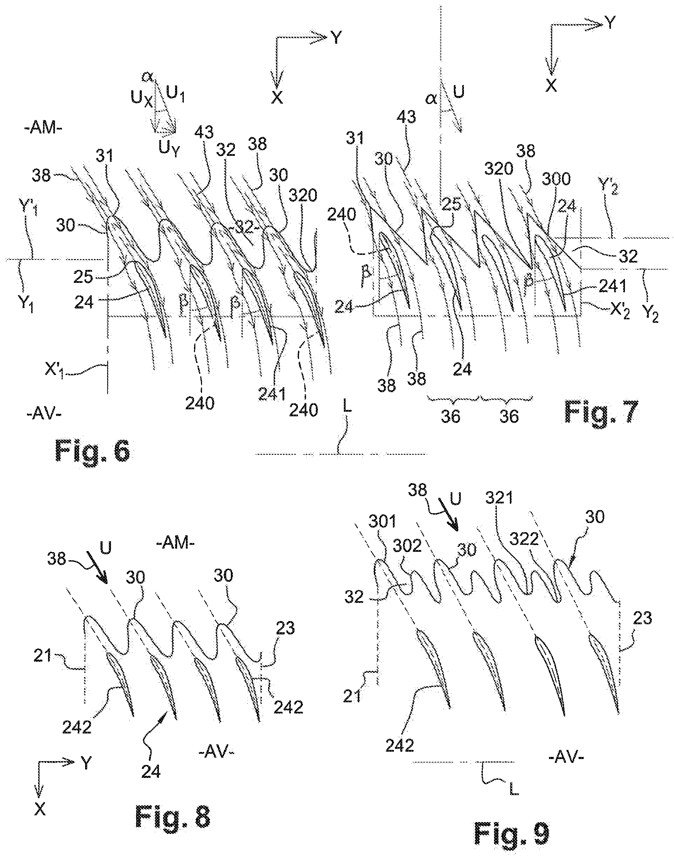

Quelle que soit l'application, concernant un profil 28 quelconque à serrations, on va ici considérer qu'il présente des ondulations qui définissent :
- suivant une direction (L) d'allongement du bord d'attaque ou bord de fuite, une géométrie élémentaire qui se répète, deux ondulations identiques (ou quasi-identiques, quand deux dents consécutives présentent de petites variations de géométries, à +/- 30%) de deux géométries élémentaires successives, telles que 34, 36 figures 5, 7, suivant ladite direction L présentant entre elles, suivant cette direction, une même distance, À, et
- une amplitude maximale, h, perpendiculairement à cette direction L.

Il est en outre précisé que la direction L est la direction le long de laquelle s'étend la ligne de bord d'attaque que l'on peut confondre avec le bord d'attaque 164a si on le considère sur toute sa longueur. Cette direction L peut être rectiligne (cas par exemple d'une aile, d'une dérive, d'un stabilisateur), ou courbe, voire fermée sur elle-même (cas possible par exemple d'une hélice, d'une aube de soufflante, de rotor ou de redresseur, ou du bec séparateur 16).

Conformément à l'invention, pour atténuer les fluctuations de pression localement intense, on va donc prévoir sur la structure profilée concernée que, le long du bord d'attaque 164a et/ou de fuite 164b (voir figure 12) et donc de la direction L d'allongement, depuis un premier endroit 21 vers un second endroit 23, les dents 30 du profil en serrations soient individuellement inclinées vers le second endroit : angle α figure 12, hors influence d'une soufflante, et angle β figures 6-7.

Figures 6, 7, on voit schématisée une proposition ci-avant formulée selon laquelle les IGV 24 seraient inclinés dans le plan X-Y par rapport à l'axe X ; angle β. Les dents 30 sont, circonférentiellement autour de cet axe X, inclinées chacune du même angle β (mais cet angle pourrait varier), dans la même direction que celle, commune, des IGV 24. On a en effet, ici, tenu compte de l'influence de la rotation de la soufflante 14, laquelle est supposée tourner dans le sens positif de l'axe Y (voir figure 1 et pointe de flèche suivant la direction L figure 2).

Un angle α ou β compris entre 30 et 60° par rapport à l'axe X, de préférence entre 35 et 45°, serait approprié, eu égard aux premiers résultats de tests menés. Ceci n'est pas limitatif.

Ainsi, tant les (bords d'attaque des) IGV 24 que les (bords d'attaque des) dents 30 font de fait globalement face au flux d'air 38 dont l'orientation globale oblique (ici par rapport à l'axe X) U est le résultat de ses composantes Ux suivant X et Uy suivant Y, compte tenu du sens ici convenu de rotation de la soufflante 14.

Les dents 30 sont individuellement non symétriques axialement par rapport à une parallèle audit axe général X, cette parallèle passant là encore par le sommet 31 de la dent considérée.

Le but de ces orientations peut être considéré comme double.

Premièrement, il s'agit d'éviter l'interaction entre l'écoulement accéléré et turbulent produit dans les creux 32 et le bord d'attaque 25 des IGV. Ceci peut en effet contribuer de manière significative au bruit à large bande du compresseur basse pression 22. Deuxièmement, la solution technique pourra servir à optimiser l'entrée d'air de compresseur basse pression 22 et de réduire les pertes aérodynamiques éventuelles.

Comme montré aussi figures 6-7, lesdites premières aubes/IGV 24 pourront présenter individuellement une ligne 240 de cambrure moyenne le long de leur corde, pour tenir compte de l'influence de la rotation de la soufflante 14.

L'angle d'inclinaison de l'écoulement produit par la soufflante 14 dépend du régime moteur, donc de la vitesse de rotation de la soufflante.

Aussi, envisage-t-on d'orienter les dents 30 dans la direction de la cambrure moyenne des IGV ou de la cambrure au niveau du bord d'attaque 25 de ces aubes. Les valeurs d'angles retenues pourront être moyennées le long de l'envergure ou allongement des IGV ou prendre les valeurs de la cambrure des IGV en tête d'aube, ou encore être fixées au régime de fonctionnement de la turbomachine le plus intéressant du point de vue aéro-acoustique.

Comme illustré et dans cet exemple, l'extrados 241 est dirigé vers la direction positive Y, l'intrados du côté opposé.

Pour encore limiter l'impact acoustique sur les IGV 24 du flux d'air tourbillonnant que la soufflante 14 génère donc en aval, il est aussi proposé, comme montré figures 6-7 notamment, que les dents 30 soient, circonférentiellement autour dudit axe général X, orientées globalement dans la direction d'une tangente 43 à ladite ligne 240 de cambrure moyenne des aubes IGV 24, au niveau de leurs bords d'attaque 25. La tangente forme un angle (*β*) non nul par rapport à la direction de l'axe général (X) de la turbomachine.

Un avantage est alors d'aligner les dents 30 dans la direction de la cambrure des IGV et de nouveau de pouvoir adapter la géométrie de l'entrée d'air du compresseur 22 à son environnement. La direction de l'écoulement d'air à l'aval de la soufflante 12 dépendant de sa vitesse de rotation, aligner les dents dans la direction des IGV (qui sont une partie fixe) pourrait donc être un bon compromis entre vitesses variables et géométries à figer.

Le long de l'axe général X, les dents 30 pourront en particulier être situées en amont par rapport aux bords d'attaque des aubes IGV 24, comme on le constate figure 7.

Toutefois, pour une limitation dimensionnelle pouvant exister entre le bord d'attaque du bec et les aubes IGV (typiquement de l'ordre de 1-5 cm), ainsi que pour avoir la possibilité d'augmenter la taille/l'amplitude des dents 30, il est proposé que, toujours dans cette direction de l'axe X, les fonds 320 des creux 32 du profil 28 à serrations appartiennent au moins pour certains à une première surface, transversale audit axe X, repérée Y1 figure 6 et Y2 figure 7, positionnée au niveau (figure 6) ou plus en aval (AV ; figure 9) qu'une seconde surface également transversale à l'axe X, repérée Y'1 figure 6 et Y'2 figure 7, à laquelle appartiennent au moins certains des bords d'attaque 25 des aubes IGV 24. Malgré les illustrations, ceci est a priori indépendant de la forme des (sommets des) dents 30 et des (fonds 320 des) creux 32.

A ce sujet, les dents 30 et creux 32 du profil 28 à serrations présenteront individuellement une forme ondulée, avec des sommets arrondis (figures 6, 9 ou 11 par exemple) ou pointus (figure 7), ceci pour favoriser une réduction de bruit efficace en minimisant les contraintes mécaniques supportées par cette géométrie.

Quant aux formes des parois latérales (dont l'une est repérée 300 figure 7) de ces dents 30 et creux 32, elles pourront se présenter individuellement et localement comme rectilignes (figure 7), ceci pour favoriser la décorrélation des sources de bruit le long du bord d'attaque et pour faciliter la fabrication de cette géométrie.

Les pointillés sur la figure 10 schématisent le fait que les inclinaisons des dents 30 du profil en serrations pourraient varier en fonction du régime moteur de la turbomachine et/ou des phases de fonctionnement de l'aéronef (typiquement phases de vol). Dans l'exemple, il s'agit d'OGV 26.

Un mécanisme commun par pivotement des dents 30, piloté par une logique de commande couplée avec par exemple un asservissement tenant compte du régime moteur, pourrait alors permettre de faire varier leurs inclinaisons, le long la direction d'allongement L, autour d'axes parallèles entre eux mais perpendiculaires à cette direction d'allongement L (voir un de ces axes repéré 30a figures 10 et 11).

Ainsi, comme schématisé figure 11, pourra-t-on avoir une géométrie 28, par exemple d'un bec à bord d'attaque ondulé, avec une inclinaison variable des dents 30, en fonction du régime moteur. Sur cette figure sont schématisées une représentation simplifiée des lignes de courant du flux d'air 38 et des aubes IGV 24, avec des orientations ici « en opposition angulaires » entre celle des IGV et celle des dents 30 : dents 30 orientées en oblique vers le côté 23, IGV 24 orientées en oblique vers le côté 21, dans cet exemple.

Par ailleurs, les dents 30 étant disposées de façon périodique le long de la direction d'allongement L, elles peuvent être toutes identiques, comme figure 6 ou 7. Tout en conservant une structure profilée à forme ondulée périodique, on peut toutefois prévoir, comme figure 9, des (groupes de) dents (successives) 30 qui, au sein de certaines au moins des périodes, soient différentes entre elles (voire dents 301 et 302 par exemple) ; de même pour les creux entre eux (voire creux 321 et 322 par exemple).

Ainsi, la géométrie élémentaire sera à plusieurs ondulations, deux dans l'exemple.

De la sorte, sans qu'elles soient mobiles, les dents du profil pourraient plus finement être adaptées à la complexité et à la variabilité des flux d'air reçus.

Encore sur un bec 16, pour bénéficier d'une aérodynamique favorable notamment à l'entrée d'air du compresseur basse pression 22, il est par ailleurs prévu qu'autour de l'axe X, certains au moins des creux 32 du profil 28 à serrations puissent être décalés angulairement (circonférentiellement) par rapport à la position angulaire des aubes IGV 24, de telle sorte que, dans la direction L, ces creux 32 soient interposés entre deux premières aubes IGV 24 circonférentiellement successives, comme illustré figures 8-9.

Sur ces figures, les IGV 24 sont même placés axialement (X) dans la continuité des dents 30 ; plus précisément chaque corde 242 d'IGV 24 a été placée, suivant la direction générale U de l'écoulement d'air 38 qui l'impacte, sensiblement dans l'alignement du sommet de la dent 30 qui précède cet IGV, vers l'amont (AM).

Si les explications et commentaires ci-avant ont été faits, en relation avec les figures présentées, essentiellement en référence à des situations en bord d'attaque, des bords de fuite pourraient être concernés, en alternative ou complément, tel des (lignes de) bords de fuite 164b à profil 28 en serrations d'aile, comme montré figure 12.

Au bord de fuite, la source de bruit peut typiquement être liée à l'interaction entre la turbulence dans la couche limite du profil et ce bord de fuite.

On aura compris que, de façon générale, les solutions proposées ci-avant ont eu pour objectif(s) d'optimiser l'orientation des dents d'un dit profil aérodynamiques 28 en serrations pour réduire le bruit à large bande produit par ces profils (aubes, OGV, IGVs, bec, ...etc) en minimisant l'impact sur les propriétés aérodynamiques des structures qui les portent et/ou environnantes, en particulier celles situées en aval.

## Revendications

1. Turbomachine (10) pour aéronef,
- la turbomachine présentant un axe général (X) autour duquel tournent des parties rotatives de la turbomachine, dont des aubes d'une soufflante amont (14),
- la turbomachine comprenant, qui chacune présente un bord d'attaque (164a) :
-- une paroi (160) annulaire de séparation d'un flux d'air, en aval de la soufflante amont (14), la paroi (160) annulaire de séparation séparant le flux d'air en un flux primaire et un flux secondaire,
-- des premières aubes (24,IGV) fixes de guidage du flux primaire (Fp) dans la turbomachine, et
-- des secondes aubes (26,OGV) fixes de guidage du flux secondaire dans la turbomachine, les premières aubes (24,IGV) fixes de guidage du flux primaire (Fp) et les secondes aubes (26,OGV) fixes de guidage du flux secondaire (Fs) étant liées à la paroi (160) annulaire de séparation, et
- la turbomachine étant pourvue d'au moins une structure profilée,
-- ayant un profil (28) de bord d'attaque (164a) en serrations présentant une succession de dents (30) et de creux (32), et
-- telle que, le long du bord d'attaque (164a), depuis un premier endroit (21) vers un second endroit (23), les dents (30) du profil en serrations sont individuellement inclinées vers le second endroit, la turbomachine étant **caractérisée en ce que** ;
a) les dents (30) sont, circonférentiellement autour dudit axe général (X) et en aval de la soufflante amont, individuellement inclinées (β) vers une orientation (U,42) globalement oblique du flux d'air (38) par rapport audit axe général (X), pour lui faire globalement face, ou
b) sur la paroi (160) annulaire de séparation du flux d'air où elles sont présentes, les dents sont orientées dans la direction de la ligne (240) de cambrure des premières aubes (24,IGV) fixes, au niveau du bord d'attaque, ou
c) autour dudit axe général (X), certains au moins desdits creux (32) du profil (28) à serrations sont décalés angulairement par rapport à la position angulaire des premières aubes (24, IGV) fixes de guidage du flux primaire (Fp) dans la turbomachine, de telle sorte que lesdits certains au moins des creux (32) soient angulairement interposés entre deux premières aubes (24, IGV) circonférentiellement successives.

2. Turbomachine selon la revendication 1, dans laquelle les dents (30) et creux (32) du profil en serrations présentent individuellement une forme ondulée, avec des sommets (31) arrondis ou plus pointus.

3. Turbomachine selon l'une quelconque des revendications précédentes, dans laquelle les dents (30) et creux (32) du profil en serrations présentent individuellement une forme à parois latérales (300) localement rectilignes.

4. Turbomachine selon la revendication 2 ou les revendications 2 et 3, dans laquelle la forme ondulée est périodique et présente, dans certaines au moins des périodes, des dents (30) différentes entre elles et/ou des creux (32) différents entre eux.

5. Turbomachine selon l'une quelconque des revendications précédentes, dans laquelle les inclinaisons individuelles (β) des dents (30) du profil en serrations varient en fonction d'un régime moteur de la turbomachine.

6. Aéronef (100) comprenant une turbomachine (1) pour se déplacer, selon l'une quelconque des revendications 1 à 5.

## Patentansprüche

1. Turbotriebwerk (10) für Luftfahrzeuge, wobei
- das Turbotriebwerk eine Hauptachse (X) aufweist, um die sich rotierende Teile des Turbotriebwerks, einschließlich der Schaufeln eines stromaufwärts gelegenen Gebläses (14), drehen,
- das Turbotriebwerk jeweils mit einer Vorderkante (164a) versehen enthält:
-- eine ringförmige Trennwand (160) zum Trennen eines Luftstroms stromabwärts des stromaufwärts gelegenen Gebläses (14), wobei die ringförmige Trennwand (160) den Luftstrom in eine Primärströmung und eine Sekundärströmung trennt,
-- erste feststehende Schaufeln (24, IGV) zur Führung der Primärströmung (Fp) in dem Turbotriebwerk, und
-- zweite feststehende Schaufeln (26, OGV) zur Führung der Sekundärströmung in dem Turbotriebwerk, wobei die ersten feststehenden Schaufeln (24, IGV) zur Führung der Primärströmung (Fp) und die zweiten feststehenden Schaufeln (26, OGV) zur Führung der Sekundärströmung (Fs) mit der ringförmigen Trennwand (160) verbunden sind, und
- das Turbotriebwerk mit zumindest einer Profilstruktur versehen ist, die
-- ein Zackenprofil (28) der Vorderkante (164a) mit einer Folge von Zähnen (30) und Vertiefungen (32) aufweist, und
-- derart ausgebildet ist, dass entlang der Vorderkante (164a) von einer ersten Stelle (21) zu einer zweiten Stelle (23) die Zähne (30) des Zackenprofils einzeln zur zweiten Stelle hin geneigt sind,
wobei das Turbotriebwerk **dadurch gekennzeichnet ist, dass**
a) in Umfangsrichtung um die Hauptachse (X) herum und stromabwärts des stromaufwärts gelegenen Gebläses die Zähne (30) einzeln zu einer bezüglich der Hauptachse (X) insgesamt schrägen Ausrichtung (U, 42) des Luftstroms (38) hingeneigt (β) sind, so dass sie diesem insgesamt zugewandt sind, oder
b) an der ringförmigen Luftstromtrennwand (160), wo Zähne vorhanden sind, diese im Bereich der Vorderkante in Richtung der Wölbungslinie (240) der ersten feststehenden Schaufeln (24, IGV) ausgerichtet sind, oder
c) um die Hauptachse (X) herum zumindest bestimmte Vertiefungen (32) des Zackenprofils (28) winkelmäßig versetzt sind in Bezug auf die Winkelposition der ersten feststehenden Schaufeln (24, IGV) zur Führung der Primärströmung (Fp) in dem Turbotriebwerk, so dass zumindest die bestimmten Vertiefungen (32) winkelmäßig zwischen zwei in Umfangsrichtung aufeinanderfolgenden ersten Schaufeln (24, IGV) angeordnet sind.

2. Turbotriebwerk nach Anspruch 1,
wobei die Zähne (30) und Vertiefungen (32) des Zackenprofils einzeln eine Wellenform mit abgerundeten oder spitzeren Scheitelpunkten (31) aufweisen.

3. Turbotriebwerk nach einem der vorhergehenden Ansprüche,
wobei die Zähne (30) und Vertiefungen (32) des Zackenprofils einzeln eine Form mit bereichsweise geradlinigen Seitenwänden (300) aufweisen.

4. Turbotriebwerk nach Anspruch 2 oder nach Anspruch 2 und 3,
wobei die Wellenform periodisch ist und zumindest bei bestimmten Perioden voneinander verschiedene Zähne (30) und/oder voneinander verschiedene Vertiefungen (32) aufweist.

5. Turbotriebwerk nach einem der vorhergehenden Ansprüche,
wobei die einzelnen Neigungen (β) der Zähne (30) des Zackenprofils in Abhängigkeit von einer Motordrehzahl des Turbotriebwerks variieren.

6. Luftfahrzeug (100), enthaltend ein Turbotriebwerk (1) zur Fortbewegung nach einem der Ansprüche 1 bis 5.

## Claims

1. A turbomachine (10) for an aircraft,
- the turbomachine having a general axis (X) about which rotating parts of the turbomachine rotate, including blades of an upstream fan (14),
- the turbomachine comprising, which each has a leading edge (164a):
-- an annular airflow dividing wall (160) downstream of the upstream fan (14), the annular dividing wall (160) dividing the airflow into a primary flow and a secondary flow,
-- first primary flow guide vanes (IGVs, 24) for guiding the primary flow (Fp) in the turbomachine, and
-- second secondary flow guide vanes (OGVs, 26) for guiding the secondary flow in the turbomachine, the first guide vanes (IGVs, 24) for guiding the primary flow (Fp) and the second guide vanes (OGVs, 26) for guiding the secondary flow (Fs) being connected to the annular dividing wall (160), and
- the turbomachine being provided with at least one profiled structure,
-- having a serrated leading edge (164a) profile (28) with a succession of teeth (30) and depressions (32), and
-- such that, along the leading edge (164a), from a first location (21) to a second location (23), the teeth (30) of the serrated profile are individually inclined towards the second location,
the turbomachine being **characterised in that**:
a) the teeth (30) are, circumferentially around said general axis (X) and downstream of the upstream fan, individually inclined (β) towards a generally oblique orientation (U, 42) of the airflow (38) with respect to said general axis (X), to face it generally, or
b) on the annular airflow dividing wall (160) where they are disposed, the teeth are oriented in the direction of the camber line (240) of the first guide vanes (IGV, 24) at the leading edge, or
c) about said general axis (X), at least some of said depressions (32) of the serrated profile (28) are angularly offset with respect to the angular position of the first guide vanes (IGV 24) for guiding the primary flow (Fp) in the turbomachine, so that said at least some of the depressions (32) are angularly interposed between two circumferentially successive first blades (IGV 24).

2. Turbomachine according to claim 1, wherein the teeth (30) and depressions (32) of the serrated profile individually have a wavy shape, with rounded or more sharp tops (31).

3. Turbomachine according to any of the foregoing claims, wherein the teeth (30) and depressions (32) of the serrated profile individually have a shape with locally rectilinear side walls (300).

4. Turbomachine according to claim 2 or claims 2 and 3, in which the wavy shape is periodic and has, in at least some of the periods, teeth (30) which are different from one another and/or depressions (32) which are different from one another.

5. Turbomachine according to any of the foregoing claims, in which the individual inclinations (β) of the teeth (30) of the serrated profile vary according to an engine speed of the turbomachine.

6. Aircraft (100) comprising:
- at least one turbomachine (1) for moving, according to any one of claims from 1 to 5.
